(19) Europäisches Patentamt
European Patent Office
Office européen des brevets

(11) Publication number: 0 355 880 B1

(12) EUROPEAN PATENT SPECIFICATION

(45) Date of publication of patent specification: **08.12.93**

(51) Int. Cl.⁵: **C08F 210/16**

(21) Application number: **89201838.3**

(22) Date of filing: **12.07.89**

# (54) Ethylene copolymers and process for preparing them.

(30) Priority: **29.07.88 IT 2154988**

(43) Date of publication of application:
**28.02.90 Bulletin 90/09**

(45) Publication of the grant of the patent:
**08.12.93 Bulletin 93/49**

(84) Designated Contracting States:
**AT BE CH DE ES FR GB GR LI LU NL SE**

(56) References cited:
**EP-A- 0 307 041**
**US-A- 3 640 928**
**US-A- 3 681 309**

(73) Proprietor: **ENIRICERCHE S.p.A.**
**Corso Venezia 16**
**I-20121 Milan(IT)**

Proprietor: **ENICHEM SYNTHESIS S.p.A.**
**Via Ruggero Settimo 55**
**I-90139 Palermo(IT)**

(72) Inventor: **Roggero, Arnaldo**
**Via Libertà 72**
**20097 San Donato Milanese, Milan(IT)**
Inventor: **Bertolini, Guglielmo**
**Via Parco Vecchio 30/3**
**27100 Pavia(IT)**

(74) Representative: **Roggero, Sergio et al**
**Ing. Barzanò & Zanardo Milano S.p.A.**
**Via Borgonuovo 10**
**I-20121 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to new ethylene copolymers intrinsically stabilized towards the action of the degrading agents, in particular towards U.V. light.

The invention relates also to the process for preparing such copolymers.

It is well-known that the organic polymers are prone to undergo degradation over time, due to the effect of their exposure to the atmospheric agents, and, in particular, to U.V. light.

In order to counteract such a degradation, introducing into the organic polymers small amounts of stabilizer compounds, generally constituted by sterically hindered amines, such as disclosed, e.g., in U.S. patents Nos. 3,640,928; 3,840,494 and 4,046,731 is usual in the art.

A particular class of stabilizer compounds is disclosed in European patent application EP-A-0 307 041. The stabilizer compounds of this patent application are 4-oxymethylene-[2′-(norborn-5′-enyl)]-(2,2,6,6-tetramethyl-piperidine) and the relevant N-substituted derivatives thereof, which are admixed to the organic polymers, in particular with polyolefins, in order to endow the relevant compositions with stability characteristics.

The present Applicant has found now that the stabilizer compounds of the above cited European patent application can be copolymerized with ethylene, or with ethylene and an alpha-olefin with three or more carbon atons, in order to yield new, intrinsically stabilized, ethylene copolymers.

In accordance therewith, the present invention relates to ethylene copolymers, characterized in that they contain in their macromolecule:

(a) units deriving from ethylene;

(b) possibly, units deriving from an alpha-olefin containing three or more carbon atoms in their molecule; and

(c) units deriving from 4-oxymethylene-[2′-(norborn-5′-enyl)]-(2,2,6,6-tetramethyl-piperidine), or relevant N-substituted derivatives thereof:

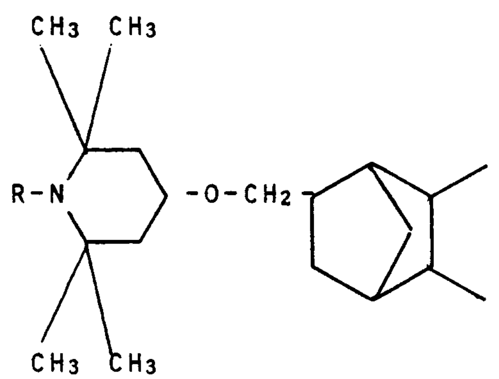

wherein:

R represents a hydrogen atom, or a ($C_1$-$C_{18}$)-alkyl radical, or an aryl-($C_1$-$C_{18}$)-alkyl radical, in which the alkyl can be either straight or branched;

with the amount of (c) units in the copolymer being such as to supply the same copolymer with a nitrogen content of at least 0.0075% by weight.

The (c) unit will preferably supply the copolymer with a nitrogen amount comprised within the range of from 0.01 to 0.02% by weight, although values of about 1% by weight can be reached as well.

Preferably, in the formula which defines the (c) unit, "R" represents the hydrogen atom, or a methyl or benzyl radical.

Therefore, preferred (c) components for the purposes according to the present invention are:

- 4-oxymethylene-[2′-(norborn-5′-enyl)]-(2,2,6,6-tetramethyl-piperidine);
- 4-oxymethylene-[2′-(norborn-5′-enyl)]-(2,2,6,6-tetramethyl-N-methyl-piperidine); and
- 4-oxymethylene-[2′-(norborn-5′-enyl)]-(2,2,6,6-tetramethyl-N-benzyl-piperidine).

These compounds can be prepared by means of the Diels-Alder reaction, by causing cyclopentadiene to react with 4-oxy-allyl-2,2,6,6-tetramethyl-piperidine, or with the relevant N-substituted derivatives thereof.

In the preferred form of practical embodiment of the present invention, the (b) unit in the copolymer of the invention will be absent. In case it is present, the (b) unit will be preferably constituted by propylene.

The ethylene copolymers according to the present invention are prepared by means of the copolymerization of the monomers in the presence of a catalytic system of Ziegler type, formed by a compound of vanadium, (possibly associated with a compound of titanium) and a trialkyl-aluminum or an alkyl-aluminum halide.

Vanadium compounds suitable for the intended purpose are either inorganic or organic compounds of vanadium, such as vanadium halides or vanadium oxy-halides, and vanadium acetylacetonate. The vanadium compound, possibly associated with an either organic or inorganic titanium compound, can be used as such, or it can be supported on a suitable support, as those skilled in the field of Ziegler-type catalysis are well aware of.

The other component of the catalytic system is preferably selected from among triethyl-aluminum, diethyl-aluminum chloride and ethyl-aluminum sesquichloride.

Advantageously, in the catalytic system a value of the atomic ratio of aluminum to vanadium will be maintained, which is comprised within the range of from 10:1 up to 100:1.

The polymerization is preferably carried out by means of the suspension technique, in an inert organic solvent, for example an aliphatic hydrocarbon solvent, such as n-heptane.

The polymerization can be carried out in the presence of hydrogen, at a temperature which can be comprised within the range of from -30 °C up to the boiling temperature of the solvent used as the reaction medium, and under a pressure which can be generally comprised within the range of from room pressure up to 140 bar .

The reaction product, which is separated by means of the usual methods known in the art, contains the units derived from 4-oxymethylene-[2′-norborn-5′-enyl)]-(2,2,6,6-tetramethyl-piperidine), or from the relevant N-substituted derivatives thereof, bound in its macromolecule.

These (c) units endow the copolymer with characteristics of stability, in particular towards U.V. light, which are permanent in that the (c) units are part of the macromolecular chain and in practice are not extractible.

The following experimental Examples will illustrate the present invention in greater detail.

Example 1 (Comparative Example)

A reactor of tubular type, equipped with thermometer, mechanical stirrer, and with a system for the introduction of the gases at the reactor bottom through previously calibrated flow meters. The reactor temperature is controlled by means of the use on an external bath.

To the reactor, previously purged and maintained under an inert atmosphere, 200 ml of anhydrous n-heptane is charged, and then the feeding is started of ethylene of polymerization grade at the flow rate of 100 Nl/hour, and of pure nitrogen, at the rate of 200 Nl/hour. The temperature is adjusted at 0 °C and is maintained at this value by means of the external bath.

Then 1 mmol (120 mg) of $Al(C_2H_5)_2Cl$ in heptane solution and 0.1 mmol (34.8 mg) of $V(C_5H_7O_2)_3$ (vanadium acetylacetonate) in toluene solution are charged to the reactor in the same order as cited.

The polymerization is carried out for 15 minutes and is then discontinued by means of the addition of 2 ml of ethyl alcohol. The obtained polymer is isolated by means of filtration, is washed with heptane and is dried inside a vacuum oven at 50 °C. 5.5 g of product is obtained as a white powder.

Example 2

The process is carried out in the same way as of Example 1, with 200 ml of anhydrous n-heptane being charged to the reactor, and 100 Nl/hour of ethylene of polymerization grade, and 200 Nl/hour of pure nitrogen being flown through it. After the temperature being adjusted at 0 °C, 0.79 g (3 mmol) of 4-oxymethylene-[2′-(norborn-5′-enyl)]-(2,2,6,6-tetramethyl-piperidine) (PINO), 20 mmol (2.4 g) of $Al(C_2H_5)_2Cl$ in heptane solution and 0.3 mmol (104.4 mg) of $V(C_5H_7O_2)_3$ in heptane solution are charged to the reactor, in the same order as cited.

The polymerization is carried out for 15 minutes and is then discontinued by means of the addition of 2 ml of ethyl alcohol. The obtained copolymer is isolated by means of filtration, is washed with heptane and is dried inside a vacuum oven at 50 °C. 1.5 g of an ethylene-PINO copolymer is obtained as a white powder.

The copolymer is extracted for 4 hours with boiling pentane inside a Kumagawa extractor, in order to remove any possible unreacted monomers and is dried again.

The elemental analysis of ethylene-PINO copolymer yields the following values:
C = 85%, H = 14.1% and N = 0.66% by weight.
From these values, the content of PINO units in the copolymer is estimated to be of 12.4% by weight.

The copolymer is then submitted to I.R. spectroscopy, using the bands at 1092 $cm^{-1}$ for PINO comonomer and at 716 $cm^{-1}$ for ethylene comonomer. On the basis of the I.R. analysis, the PINO content in the copolymer is evaluated to be of 11.7% by weight.

The copolymeric nature of the product of Example 2 was tested also by means of differential scanning calorimetry (DSC), carried out under comparison with the ethylene homopolymer obtained from Example 1. The results are reported in following Table 1.

Table 1

| Example No. | N, % by weight | PINO Content | | Thermal analysis | | |
|---|---|---|---|---|---|---|
| | | Elemental Analysis | I.R. | Tc(°C) | Tm(°C) | Hf (cal/g) |
| 1 | -- | -- | -- | 121 | 134.5 | 41.5 |
| 2 | 0.66 | 12.4 | 11.7 | 118 | 115-128 | 37.5 |

Example 3

In order to evaluate the content of (c) comonomer in copolymers containing a low concentration, not otherways detectable, of this latter, the deuterated PINO-$CD_3$ comonomer:

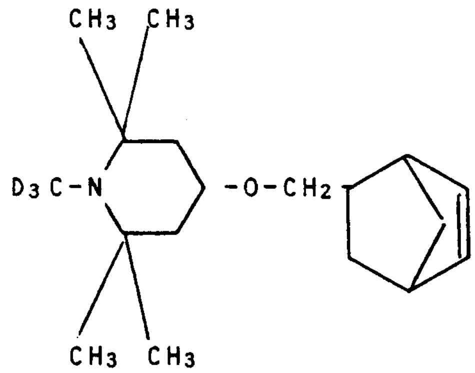

is prepared by means of the metallation of the aminic function of PINO, and following reaction with $CD_3J$.

In particular, to a flask of 100 ml of capacity, equipped with thermometer and magnetic stirrer, and maintained under an inert atmosphere, 30 ml of anhydrous tetrahydrofuran is added. By means of the external bath, the temperature is adjusted at -40 °C.

28 mmol (1.80 g) of Li-n-$C_4H_9$ in 1.6 M hexane solution is charged and then 19 mmol (5.0 g) of PINO dissolved in 15 ml of anhydrous tetrahydrofuran ia dropwise added. The reaction is exothermic and is controlled with the aid of the external bath. The reaction is allowed to proceed for one hour at -40 °C, the temperature is allowed to increase up to -10 °C and then 28 mmol (4.06 g) of $CD_3J$ is dropwise added. The reaction mixture is kept with stirring until room temperature is reached.

The raw reaction product is washed with water and is repeatedly extracted with diethyl ether. The desired product PINO-$CD_3$ is isolated by removing the solvent, and is identified by means of gas-chromatography and $^2$H-N.M.R. analsis.

The $^2$H-N.M.R. method is then calibrated by preparing suitable mechanical mixtures of ethylene homopolymer and PINO-$CD_3$. The limit of detectability of PINO was established to be at 0.05% by weight.

Example 4

The process is carried out in the same way as in Example 1, with 200 ml of n-heptane being charged to the reactor, and 100 Nl/hour of ethylene of polymerization grade, and 50 Nl/hour of hydrogen being flown through it. After temperature being adjusted at 0 °C, PINO-$CD_3$ (prepared in Example 3) (0.3 mmol; 84 mg), $Al(C_2H_5)_2Cl$ (42 mmol; 5,04 g) in heptane solution and $V(C_5H_7O_2)_3$ (0.7 mmol; 244 mg) in heptane solution are charged to the reactor in the same order as shown.

Therefore, the atomic ratio of Al to V in the catalyst is of 60:1, and the molar ratio of the

aluminum compound in the catalyst to PINO-$CD_3$ monomer is of 140:1.

The polymerization is carried out for 30 minutes and 7.3 g of copolymer is obtained as a white powder.

The product is extracted for 4 hours with boiling pentane inside a Kumagawa extractor, in order to remove any possible unreacted monomers. The residues of the catalyst are eliminated by means of repeated treatments, in suspension in hexane, with an excess of acetylacetone.

The resulting copolymer shows a value of Melt-Flow Index of 2.0 g/10 minutes (ASTM D 1238; 2.16 kg), and a content of 0.4% by weight of PINO-$CD_3$ comonomer.

Example 5

The process is carried out in the same way as in Example 1, with 200 ml of n-heptane being charged to the reactor, and 100 Nl/hour of ethylene of polymerization grade, and 50 Nl/hour of hydrogen being flown through it. After temperature being adjusted at 0 °C, PINO-$CD_3$ (prepared in Example 3) (0.15 mmol; 42 mg), $Al(C_2H_5)_2Cl$ (30 mmol; 3.6 g) in heptane solution and $V(C_2H_7O_2)_3$ - (0.5 mmol; 174 mg) in heptane solution are charged to the reactor in the same order as shown.

Therefore, the atomic ratio of Al to V in the catalyst is of 60:1, and the molar ratio of the aluminum compound in the catalyst to PINO-$CD_3$ monomer is of 200:1.

The polymerization is carried out for 30 minutes and 6.5 g of copolymer is obtained as a white powder.

The copolymer is treated as disclosed in Example 4, and a purified copolymer is finally obtained, which has a value of Melt-Flow Index of 1.8 g/10 minutes (ASTM D 1238; 2.16 kg), and a content of 0.15% by weight of PINO-$CD_3$ comonomer.

Example 6 (Comparative Example)

The process is carried out in the same way as in Example 1, with 200 ml of n-heptane being charged to the reactor, and 100 Nl/hour of ethylene of polymerization grade, and 150 Nl/hour of hydrogen being flown through it. After the temperature being adjusted at 0 °C, $Al(C_2H_5)_2Cl$ (1 mmol; 120 mg) in heptane solution and $V(C_5H_7O_2)_3$ (0.1 mmol; 34.8 mg) in heptane solution are charged to the reactor.

The polymerization is allowed to proceed for 30 minutes and 4.9 g of ethylene homopolymer is obtained as a white powder; it is liberated from the catalytic residues as disclosed in Example 4.

The resulting homopolymer has a value of Melt-Flow Index of 1.9 g/10 minutes (ASTM D 1238; 2.16 kg).

Example 7

The copolymers prepared in Examples 4 and 5 are evaluated for their stability towards light, as compared to the homopolymer prepared in Example 6, with which the compound PINO, the commercial stabilizer TINUVIN(R) 770 or the commercial stabilizer CHIMASSORB(R) 944 was previously mixed, in such an amount as to yield a same concentration of active nitrogen.

The blend of homopolymer of Example 6 and of additive is homogenized by means of two extrusions under melting conditions.

The copolymers from Examples 4 and 5 undergo the same treatment.

The copolymers and the homopolymer-additive compositions are press-moulded in order to obtain films of 110 $\mu$m of thickness, which are submitted to accelerated ageing in UV-CON, with cycles of 8 hours of irradiation at 60 °C with fluorescence lamps (UV radiations of from 280 to 350 nm) and of 4 hours of condensation in the dark at 40 °C. The degradation is evaluated in terms of "embrittlement time" (ET) and is expressed as hours.

In a parallel test run, the films are also submitted to a washing in the aqueous solution of a commercial detergent (DIXAN) at 0.5%, for 6 hours at 80 °C, before ageing, in order to evaluate the characteristics of extractibility and of resistance to hydolysis.

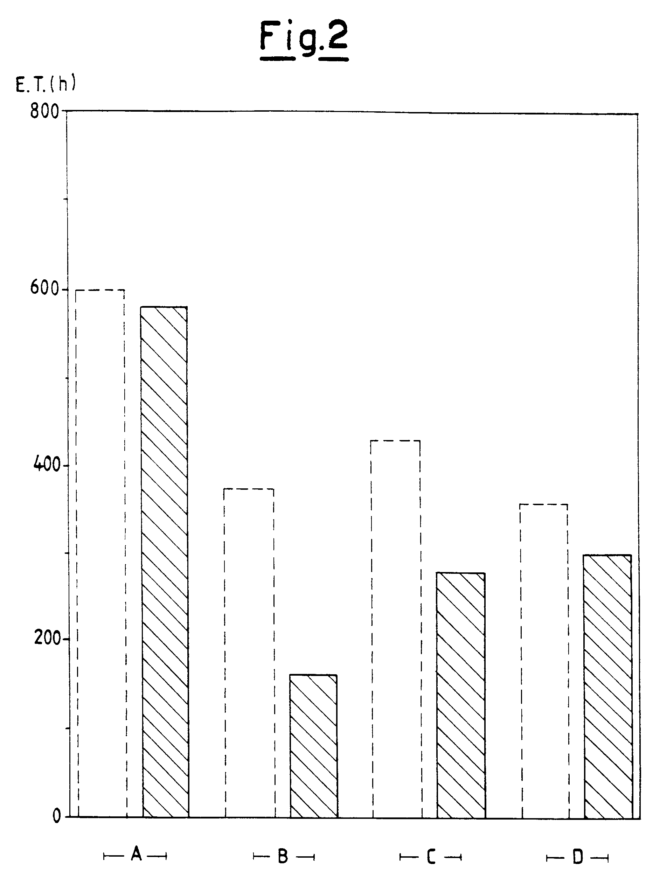

The results are reported in Figures 1 and 2 of the hereto attached drawing tables.

More particularly, in Figure 1, in the ordinate the value of ET (expressed as hours) is reported for the following films, reported on the abscissa:

A = copolymer of Example 4 (content of active nitrogen 0.075% by weight)

B = homopolymer of Example 7, blended with PINO up to a content of active nitrogen of 0.075% by weight

C = homopolymer of Example 7, with added TINUVIN(R) 770 up to a content of 0.075% by weight of active nitrogen.

D = homopolymer of Example 7 with added CHIMASSORB(R) 944 up to a content of 0.075% by weight of active nitrogen.

In the figure, the dark bar relates to the film treated with the aqueous solution of detergent, and the white bar relates to the pristine film.

In a similar way, in Figure 2:

A = copolymer of Example 5 (content of active nitrogen 0.02% by weight)

B = homopolymer of Example 7, blended with PINO up to a content of active nitrogen of

0.02% by weight

C = homopolymer of Example 7, with added TINUVIN(R) 770 up to a content of 0.02% by weight of active nitrogen.

D = homopolymer of Example 7 with added CHIMASSORB(R) 944 up to a content of 0.02% by weight of active nitrogen.

In this figure too, the dark bar relates to the film treated with the aqueous solution of detergent, and the white bar relates to the pristine film sample.

From these figures, the by far better characteristics of stability, non-extractibility and resistance to hydrolysis of the copolymers according to the present invention clearly appear, as compared to the homopolymer with added stabilizer.

Example 8

To the reactor described in Example 1, 250 ml of anhydrous n-heptane is charged under an inert atmosphere, and a mixture of ethylene (50 Nl/hour), propylene (125 Nl/hour) and hydrogen (200 Nl/hour) is bubbled through it. The temperature is adjusted at 0 °C, and then PINO-$CD_3$ (2.8 mmol; 784 mg), $Al(C_2H_5)_2Cl$ (42 mmol; 5,04 g) and $V(C_5H_7O_2)_3$ (0.7 mmol; 244 mg) are charged to the reactor.

The polymerization is carried out for 30 minutes and is then discontinued by means of the addition of 2 ml of ethyl alcohol.

The polymer is isolated by precipitation from an acetone-methanol blend and is purified by means of repeated dissolution-precipitation cycles, and an end vacuum drying at 50 °C.

In this way, 1.8 g of ethylene/propylene/PINO-$CD_3$ terpolymer is obtained, which contains 0.6% by weight of PINO-$CD_3$.

Example 9

The process is carried out in the same way as of Example 8, with the difference that 5.6 mmol (1.57 g) of PINO-$CD_3$ is charged to the reactor.

0.8 g of ethylene/propylene/PINO-$CD_3$ terpolymer is obtained, which contains 2.3% by weight of PINO-$CD_3$.

The terpolymers of Examples 8 and 9 were in the form of very viscous liquids.

## Claims

### Claims for the following Contracting States : AT, BE, CH, DE, FR, GB, GR, LI, LU, NL, SE

**1.** Ethylene copolymers, characterized in that they contain in their macromolecule:

(a) units deriving from ethylene;

(b) possibly, units deriving from an alpha-olefin containing three or more carbon atoms in their molecule; and

(c) units deriving from 4-oxymethylene-[2′-(norborn-5′-enyl)]-(2,2,6,6-tetramethyl-piperidine), or relevant N-substituted derivatives thereof:

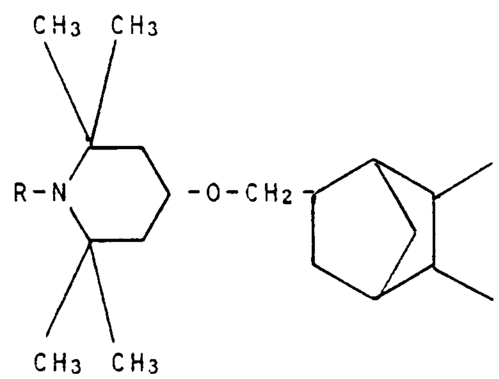

wherein:

R represents a hydrogen atom, or a ($C_1$-$C_{18}$)-alkyl radical, or an aryl-($C_1$-$C_{18}$)-alkyl radical; in which the alkyl can be either straight or branched;

with the amount of (c) units in the copolymer being such as to supply the the same copolymer with a nitrogen content of at least 0.0075% by weight.

**2.** Copolymers according to claim 1, characterized in that the (c) unit supplies a nitrogen amount comprised within the range of from 0.01 to 0.02% by weight.

**3.** Copolymers according to claim 1, characterized in that "R" in the formula represents the hydrogen atom, or a methyl or benzyl radical.

**4.** Copolymers according to claim 1, characterized in that the alpha-olefin is propylene.

**5.** Process for the preparation of the copolymers according to claims from 1 to 4, characterized in that ethylene, possibly an alpha-olefin, and 4-oxymethylene-[2′-(norborn-5′-enyl)]-(2,2,6,6-tetramethyl-piperidine), or an N-susbstituted derivative of this latter are polymerized in the presence of a catalytic system formed by a compound of vanadium and possibly a compound of titanium, and by a trialkyl-aluminum or an alkyl-aluminum halide.

**6.** Process according to claim 5, characterized in that the compound of vanadium is vanadium

acetylacetonate and the compound of aluminum is selected from the group consisting of triethyl-aluminum, diethyl-aluminum chloride and ethyl-aluminum sesquichloride.

**7.** Process according to claim 5, characterized in that the polymerization is carried out by operating in suspension in an inert organic solvent, in the presence of hydrogen, at a temperature comprised within the range of from -30°C up to the boiling temperature of the solvent used, and under a pressure comprised within the range of from the room pressure up to 140 bars.

**Claims for the following Contracting State : ES**

**1.** Process for preparing Ethylene copolymers, characterized by comprising the step of combining together in the macromolecule of said copolymers:

(a) units deriving from ethylene;

(b) possibly, units deriving from an alpha-olefin containing three or more carbon atoms in their molecule; and

(c) units deriving from 4-oxymethylene-[2'-(norborn-5'-enyl)]-(2,2,6,6-tetramethyl-piperdine), or relevant N-substituted derivatives thereof:

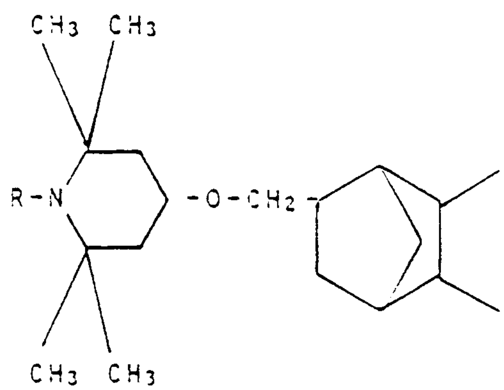

wherein:

R represents a hydrogen atom, or a ($C_1$-$C_{18}$)-alkyl radical, or an aryl-($C_1$-$C_{18}$)-alkyl radical; in which the alkyl can be either straight or branched;

with the amount of (c) units in the copolymer being such as to supply the the same copolymer with a nitrogen content of at least 0.0075%, by weight.

**2.** Process according to claim 1, characterized in that the (c) unit supplies a nitrogen amount comprised within the range of from 0.01 to 0.02% by weight.

**3.** Process according to claim 1, characterized in that "R" in the formula represents the hydrogen atom, or a methyl or benzyl radical.

**4.** Process according to claim 1, characterized in that the alpha-olefin is propylene.

**5.** Process for the preparation of the copolymers according to claims from 1 to 4, characterized in that ethylene, possibly an alpha-olefin, and 4-oxymethylene-[2'-(norborn-5'-enyl)]-(2,2,6,6-tetramethyl-piperidine), or an N-susbstituted derivative of this latter are polymerized in the presence of a catalytic system formed by a compound of vanadium and possibly a compound of titanium, and by a trialkyl-aluminum or an alkyl-aluminum halide.

**6.** Process according to claim 5, characterized in that the compound of vanadium is vanadium acetylacetonate and the compound of aluminum is selected from the group consisting of triethyl-aluminum, diethyl-aluminum chloride and ethyl-aluminum sesquichloride.

**7.** Process according to claim 5, characterized in that the polymerization is carried out by operating in suspension in an inert organic solvent, in the presence of hydrogen, at a temperature comprised within the range of from -30°C up to the boiling temperature of the solvent used, and under a pressure comprised within the range of from the room pressure up to 140 bars.

**Patentansprüche**

**Patentansprüche für folgende Vertragsstaaten : AT, BE, CH, DE, FR, GB, GR, LI, LU, NL, SE**

**1.** Ethylencopolymere, dadurch gekennzeichnet, daß sie in ihrem Makromolekül:

(a) Einheiten, welche sich aus Ethylen herleiten;

(b) gegebenenfalls Einheiten, welche sich aus einem $\alpha$-Olefin herleiten, die drei oder mehr Kohlenstoffatome in ihrem Molekül besitzen; und

(c) Einheiten enthalten, welche sich aus 4-Oxymethylen-[2'-(norborn-5'-enyl)]-(2,2,6,6-tetramethyl-piperidin) oder anwendbaren N-substituierten Derivaten hievon:

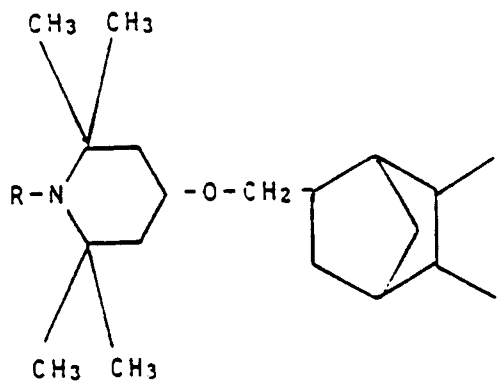

herleiten, worin:

R ein Wasserstoffatom oder einen $(C_1-C_{18})$-Alkylrest oder einen Aryl-$(C_1-C_{18})$-alkylrest darstellt, worin das Alkyl entweder linear oder verzweigt sein kann,

wobei die Menge an (c)-Einheiten im Copolymer derart ist, daß das genannte Copolymer mit einem Stickstoffgehalt von mindestens 0,0075 Gew.-% versehen wird.

**2.** Copolymere nach Anspruch 1, dadurch gekennzeichnet, daß die (c)-Einheit einen Stickstoffgehalt im Bereich von 0,01 Gew.-% bis 0,02 Gew.-% liefert.

**3.** Copolymere nach Anspruch 1, dadurch gekennzeichnet, daß "R" in der Formel das Wasserstoffatom oder einen Methyl- oder Benzylrest darstellt.

**4.** Copolymere nach Anspruch 1, dadurch gekennzeichnet, daß das $\alpha$-Olefin Propylen ist.

**5.** Verfahren zur Herstellung der Copolymeren nach den Ansprüchen 1 bis 4, dadurch gekennzeichnet, daß Ethylen, gegebenenfalls ein $\alpha$-Olefin, und 4-Oxymethylen-[2'-(norborn-5'-enyl)]-(2,2,6,6-tetramethyl-piperidin) oder ein N-substituiertes Derivat dieser letztgenannten Verbindung in Gegenwart eines katalytischen Systems polymerisiert werden, welches aus einer Vanadiumverbindung und gegebenenfalls einer Titanverbindung, und aus einem Trialkylaluminium oder einem Alkylaluminiumhalogenid gebildet wird.

**6.** Verfahren nach Anspruch 5, dadurch gekennzeichnet, daß es sich bei der Vanadiumverbindung um Vanadiumacetylacetonat handelt und die Aluminiumverbindung von der aus Triethylaluminium, Diethylaluminiumchlorid und Ethylaluminiumsesquichlorid bestehenden Gruppe ausgewählt ist.

**7.** Verfahren nach Anspruch 5, dadurch gekennzeichnet, daß die Polymerisation durch Arbeiten in Suspension in einem inerten organischen Lösungsmittel in Gegenwart von Wasserstoff bei einer Temperatur im Bereich von -30 °C bis zur Siedetemperatur des verwendeten Lösungsmittels und unter einem Druck im Bereich von Raumdruck bis zu 140 bar ausgeführt wird.

**Patentansprüche für folgenden Vertragsstaat : ES**

**1.** Verfahren zur Herstellung von Ethylencopolymeren, dadurch gekennzeichnet, dass es die Verbindung im Makromolekuel von folgenden Copolymeren umfasst:

(a) Einheiten, welche sich aus Ethylen herleiten;

(b) gegebenenfalls Einheiten, welche sich aus einem $\alpha$-Olefin herleiten, die drei oder mehr Kohlenstoffatome in ihrem Molekül besitzen; und

(c) Einheiten enthalten, welche sich aus 4-Oxymethylen-[2'-(norborn-5'-enyl)]-(2,2,6,6-tetramethyl-piperidin) oder anwendbaren N-substituierten Derivaten hievon:

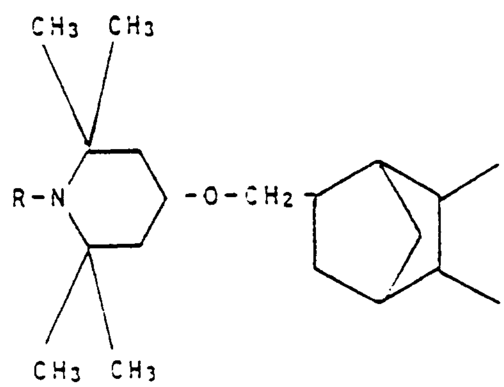

herleiten, worin:

R ein Wasserstoffatom oder einen $(C_1-C_{18})$-Alkylrest oder einen Aryl-$(C_1-C_{18})$-alkylrest darstellt, worin das Alkyl entweder linear oder verzweigt sein kann,

wobei die Menge an (c)-Einheiten im Copolymer derart ist, daß das genannte Copolymer mit einem Stickstoffgehalt von mindestens 0,0075 Gew.-% versehen wird.

**2.** Verfahren nach Anspruch 1, dadurch gekennzeichnet, daß die (c)-Einheit einen Stickstoffgehalt im Bereich von 0,01 Gew.-% bis 0,02 Gew.-% liefert.

3. Verfahren nach Anspruch 1, dadurch gekennzeichnet, daß "R" in der Formel das Wasserstoffatom oder einen Methyl- oder Benzylrest darstellt.

4. Verfahren nach Anspruch 1, dadurch gekennzeichnet, daß das α-Olefin Propylen ist.

5. Verfahren zur Herstellung der Copolymeren nach den Ansprüchen 1 bis 4, dadurch gekennzeichnet, daß Ethylen, gegebenenfalls ein α-Olefin, und 4-Oxymethylen-[2'-(norborn-5'-enyl)]-(2,2,6,6-tetramethyl-piperidin) oder ein N-substituiertes Derivat dieser letztgenannten Verbindung in Gegenwart eines katalytischen Systems polymerisiert werden, welches aus einer Vanadiumverbindung und gegebenenfalls einer Titanverbindung, und aus einem Trialkylaluminium oder einem Alkylaluminiumhalogenid gebildet wird.

6. Verfahren nach Anspruch 5, dadurch gekennzeichnet, daß es sich bei der Vanadiumverbindung um Vanadiumacetylacetonat handelt und die Aluminiumverbindung von der aus Triethylaluminium, Diethylaluminiumchlorid und Ethylaluminiumsesquichlorid bestehenden Gruppe ausgewählt ist.

7. Verfahren nach Anspruch 5, dadurch gekennzeichnet, daß die Polymerisation durch Arbeiten in Suspension in einem inerten organischen Lösungsmittel in Gegenwart von Wasserstoff bei einer Temperatur im Bereich von -30 °C bis zur Siedetemperatur des verwendeten Lösungsmittels und unter einem Druck im Bereich von Raumdruck bis zu 140 bar ausgeführt wird.

## Revendications

## Revendications pour les Etats contractants suivants : AT, BE, CH, DE, FR, GB, GR, LI, LU, NL, SE

1. Copolymères d'éthylène caractérisés en ce qu'ils contiennent dans leur macromolécule :
   (a) des motifs provenant de l'éthylène,
   (b) éventuellement des motifs provenant d'une alpha-oléfine présentant trois ou plus de trois atomes de carbone dans sa molécule, et
   (c) des motifs provenant de la 4-[2'-(norbornène-5'-yle)]méthylèneoxy-2,2,6,6-tétraméthylpipéridine ou de dérivés apparentés de cette dernière, substitués sur l'azote, de formule :

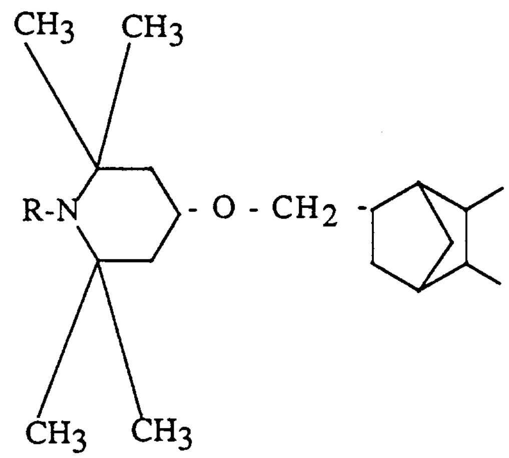

dans laquelle :
   R représente un atome d'hydrogène ou un groupe alkyle en $C_1$ à $C_{18}$ ou arylalkyle ($C_1$ à $C_{18}$), dans lequel la chaîne alkyle peut être droite ou ramifiée,
   la proportion de motifs (c) dans le copolymère étant telle qu'elle communique audit copolymère une teneur en azote d'au moins 0,0075% en poids.

2. Copolymères selon la revendication 1, caractérisés en ce que les motifs (c) apportent une proportion d'azote comprise dans l'intervalle allant de 0,01 à 0,02% en poids.

3. Copolymères selon la revendication 1, caractérisés en ce que "R" représente dans la formule un atome d'hydrogène ou un groupe méthyle ou benzyle.

4. Copolymères selon la revendication 1, caractérisés en ce que l'alpha-oléfine est le propylène.

5. Procédé de préparation des copolymères selon les revendications 1 à 4, caractérisé en ce que l'on polymérise de l'éthylène, éventuellement une alpha-oléfine, et de la 4-[2'-(norbornène-5'-yl)]méthylèneoxy-2,2,6,6-tétraméthylpipéridine ou un dérivé substitué sur l'azote de cette dernière, en présence d'un système catalytique constitué d'un dérivé du vanadium, éventuellement d'un dérivé du titane, et d'un composé du type trialkylaluminium ou halogénure d'alkylaluminium.

6. Procédé selon la revendication 5, caractérisé en ce que le dérivé du vanadium est de l'acétylacétonate de vanadium et le dérivé d'aluminium est choisi parmi le triéthylaluminium, le chlorure de diéthylaluminium et le sesquichlorure d'éthylaluminium.

**7.** Procédé selon la revendication 5, caractérisé en ce que l'on réalise la polymérisation en opérant en suspension dans un solvant organique inerte, en présence d'hydrogène, à une température comprise dans l'intervalle allant de -30 ° C jusqu'à la température d'ébullition du solvant utilisé, sous une pression comprise dans l'intervalle allant de la pression de la pièce jusqu'à 140 bars.

**Revendications pour l'Etats contractant suivant : ES**

**1.** Procédé de preparation des copolymères d' ethylène, caractérisé du fait de combiner ensemble dans la macromolécule des dits copolymères :

(a) des motifs provenant de l'éthylène,

(b) éventuellement des motifs provenant d'une alpha-oléfine présentant trois ou plus de trois atomes de carbone dans sa molécule, et

(c) des motifs provenant de la 4-[2'-(norbornène-5'-yle)]méthylèneoxy-2,2,6,6-tétraméthylpipéridine ou de dérivés apparentés de cette dernière, substitués sur l'azote, de formule :

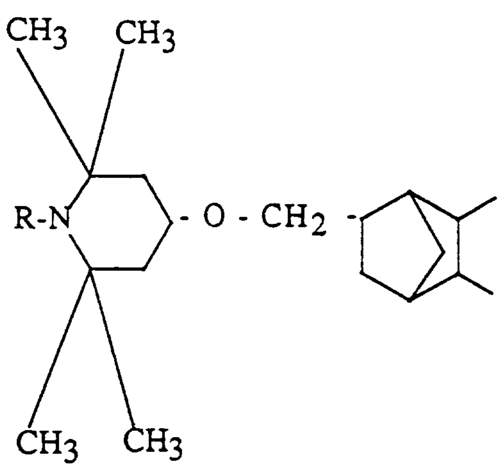

dans laquelle :

R représente un atome d'hydrogène ou un groupe alkyle en $C_1$ à $C_{18}$ ou arylalkyle ($C_1$ à $C_{18}$), dans lequel la chaîne alkyle peut être droite ou ramifiée,

la proportion de motifs (c) dans le copolymère étant telle qu'elle communique audit copolymère une teneur en azote d'au moins 0,0075% en poids.

**2.** Procédé selon la revendication 1, caractérisés en ce que les motifs (c) apportent une proportion d'azote comprise dans l'intervalle allant de 0,01 à 0,02% en poids.

**3.** Procéde selon la revendication 1, caractérisés en ce que "R" représente dans la formule un atome d'hydrogène ou un groupe méthyle ou benzyle.

**4.** Procédé selon la revendication 1, caractérisés en ce que l'alpha-oléfine est le propylène.

**5.** Procédé de préparation des copolymères selon les revendications 1 à 4, caractérisé en ce que l'on polymérise de l'éthylène, éventuellement une alpha-oléfine, et de la 4-[2'-(norbornène-5'-yl)]méthylèneoxy-2,2,6,6-tétraméthylpipéridine ou un dérivé substitué sur l'azote de cette dernière, en présence d'un système catalytique constitué d'un dérivé du vanadium, éventuellement d'un dérivé du titane, et d'un composé du type trialkylaluminium ou halogénure d'alkylaluminum.

**6.** Procédé selon la revendication 5, caractérisé en ce que le dérivé du vanadium est de l'acétylacétonate de vanadium et le dérivé d'aluminium est choisi parmi le triéthylaluminium, le chlorure de diéthylaluminium et le sesquichlorure d'éthylaluminium.

**7.** Procédé selon la revendication 5, caractérisé en ce que l'on réalise la polymérisation en opérant en suspension dans un solvant organique inerte, en présence d'hydrogène, à une température comprise dans l'intervalle allant de -30 ° C jusqu'à la température d'ébullition du solvant utilisé, sous une pression comprise dans l'intervalle allant de la pression de la pièce jusqu'à 140 bars.

Fig.1

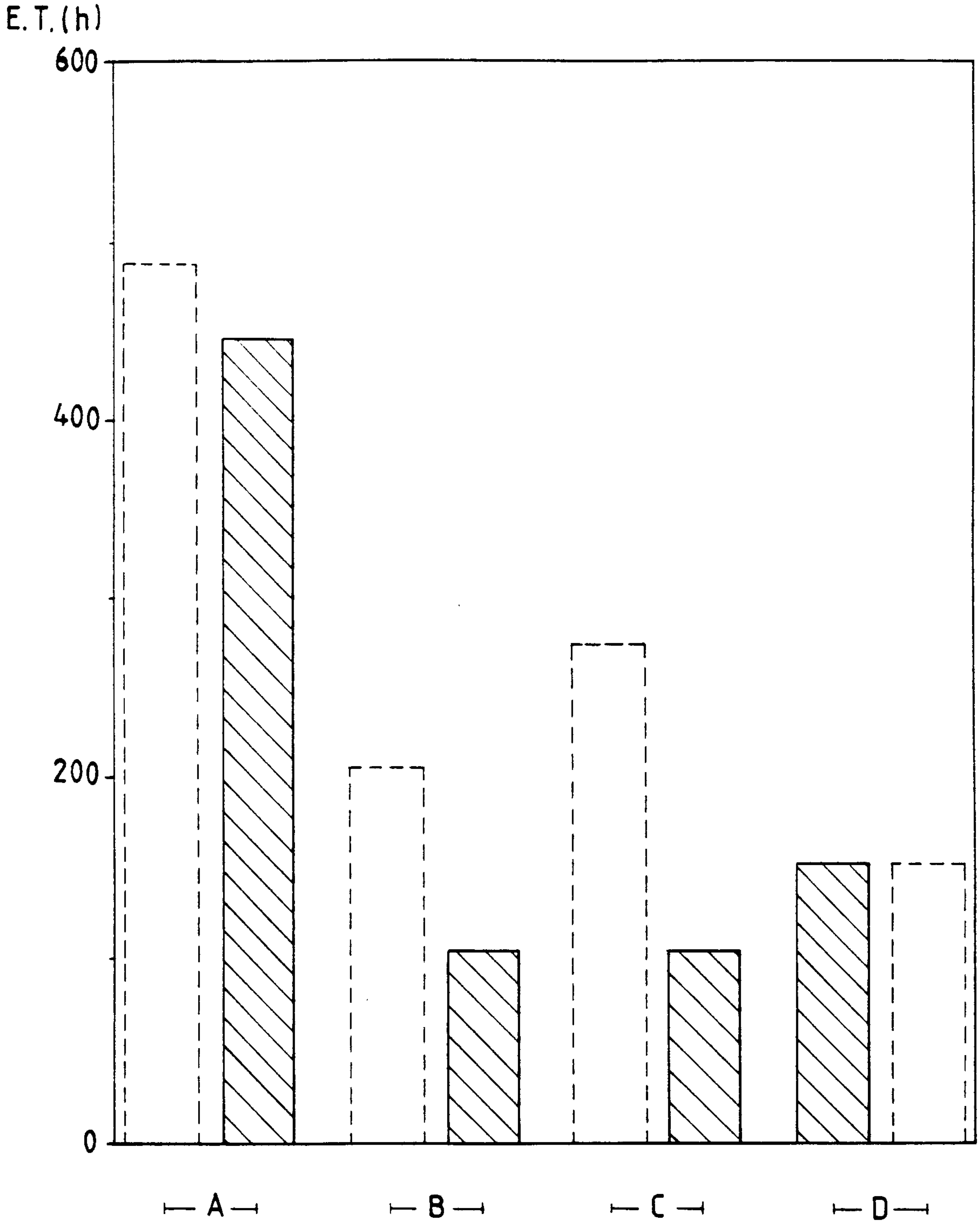

Fig.2